# EUROPEAN PATENT SPECIFICATION

(11) **EP 2 517 954 B1**
(45) Date of publication and mention of the grant of the patent: **06.11.2013**
(21) Application number: 11164112.2
(22) Date of filing: 28.04.2011
(51) Int. Cl.: B63H 21/30, F16F 15/22, F02N 5/00

(54) **Vibration compensator apparatus**
Vibrationsausgleichsvorrichtung
Appareil de compensateur de vibrations

(43) Date of publication of application: 31.10.2012
(73) Proprietor: Wärtsilä Switzerland Ltd., 8401 Winterthur (CH)
(72) Inventor: Nanda, Sangram Kishore, 8409, Winterthur (CH); Van Gijssel, Christopher, 8450, Andelfingen (CH)
(74) Representative: TBK

(56) References cited:
- EP-A1- 0 010 973
- JP-A- 58 211 048
- JP-A- 60 227 033
- JP-A- 60 237 239
- JP-A- 60 256 641
- "ANOUNCEMENT", MARINE ENGINEERS REVIEW, INSTITUTE OF MARINE ENGINEERS. LONDON, GB, 1 April 1994 (1994-04-01), XP000436190, ISSN: 0047-5955

## Description

The present invention relates to a vibration compensator apparatus adapted to compensate vibrations generated by mass forces originating from an operation of an internal combustion engine to which said apparatus is assigned.

Vibration compensator apparatuses are known which are employed to counteract vibrations which are generated by the operation of internal combustion engines, such as those engines which are mounted in a hull of a ship. Specifically, a vibration compensator apparatus according to the prior art comprises two rotor elements which are rotated in opposite rotational directions. The rotor elements are eccentric with respect to the rotational axes and rotated at the same rotational speed in order to provide inertia forces in a specified direction. The known apparatus is mounted in a structure which forms a vibration system together with the internal combustion engine. The rotational speed and rotational phase of the rotating rotor elements is controlled based on the rotational speed and rotational phase of the internal combustion engine.

In order to rotate the rotor elements, the required torque for the vibration compensator apparatus can be derived directly from the internal combustion engine via a specific transmission arrangement. However, in case that a compensation of vibrations is not required, driving the vibration compensator apparatus leads to a decrease of the efficiency of the entire system.

In view of this problem, vibration compensator apparatuses are proposed which are driven by a designated power source such as an electric motor which is controlled in order to maintain the required relation between the rotation of the rotor elements and the rotation of the internal combustion engine.

Such a compensator is disclosed in the JP 60237239.

It is the object of the present invention to provide a vibration compensator apparatus adapted to compensate vibrations generated by mass forces originating from an operation of an internal combustion engine which is driven by a specific designated power source which includes a simplified structure and can be manufactured at decreased costs.

The object is solved by a vibration compensator apparatus having the combination of the features of claim 1. Further advantageous developments are defined in the dependent claims.

The present invention provides a vibration compensator apparatus adapted to compensate vibrations generated by mass forces originating from an operation of an internal combustion engine to which said apparatus is assigned. The apparatus comprises a rotor arrangement comprising at least two rotor elements which are rotatable in opposite rotational directions about respective axes which are coaxial or parallel to each other, each rotor element having a mass related eccentricity in relation to the respective axis. Further, a main power source is provided which is drivingly connected to said rotor elements.

The vibration compensator apparatus comprises a control device which controls said main power source in a continuous operation such that a rotational speed and a rotational phase of said rotor elements achieve a predetermined relation to a rotational speed and a rotational phase of said internal combustion engine.

According to the basic concept of the present invention, the apparatus comprises, in addition to said main power source, a starting power source which is drivingly connectable to said rotor elements, wherein said control device controls a starting operation of said starting power source such that said rotor elements are moved from the stopped condition towards a predetermined rotation related condition.

According to the present invention, the main power source is employed to maintain the predetermined operation state of the vibration compensator apparatus. As such, the main power source is required to provide a power output or torque which is designed in view of the continuous or steady operation of the apparatus. That is, the main power source is required to provide a torque which is sufficient to overcome frictional losses in the continuous operation of the apparatus and to perform the regulation of the rotational speed of the rotor elements based on the variation of the rotational speed of the internal combustion engine.

In the situation where the rotor elements are in a stopped condition, the eccentricity of the rotor elements leads to a condition where the rotor elements are positioned at the bottom dead center. Upon the requirement of starting the rotation of the rotor elements, first, the rotor elements must be moved from the bottom dead center towards and through the top dead center which requires a high torque. On the other hand, a specific rotational speed should be achieved in order to start the control of the rotational phase and the rotational speed of the rotor elements. According to the inventive solution, a starting power source is provided in addition to the main power source which is employed to move the rotor elements from the bottom dead center towards and through the top dead center and drive the rotor elements in order to achieve a specific rotation related condition.

It is the effect of the specific structure of the inventive vibration compensator apparatus, that the main power source can be designed with a rated torque or rated power which is decreased with respect to the prior art power sources since the main power source is used for a continuous or steady operation, while upon starting, the rotation of the rotor elements from a stopped condition is achieved by the starting power source which is designed with a sufficient torque to move the rotor elements from the bottom dead center to the top dead center and to achieve a specific rotation related condition. Therefore, the main power source can be downsized with respect to the dimensions, the rated torque, the rated power and, in addition, the power consumption. According to the invention, the vibration compensator apparatus can be downsized as a whole and the manufacturing and operation costs thereof can be decreased.

Preferably, said starting power source is operated upon starting the rotation of said rotor elements in order to move said rotor elements from the stopped condition and the operation thereof is stopped if said predetermined rotation related condition is met, wherein after said predetermined rotation related condition is met, said rotor elements are driven only or exclusively by said main power source.

With such an arrangement, a starting power source can be employed which is adapted for the starting operation only since the requirements of such a starting power source with respect to the controllability are low.

Preferably, the predetermined rotation related condition is met if the rotor elements are rotated at least once through a top dead center, and/or if the rotational speed of the rotor elements is higher than a predetermined starting rotational speed.

Upon starting the apparatus, the main requirement is that the rotor elements are moved through the top dead center such that a vibrating operation is possible. Further, due to the inertia of the entire rotating system, a predetermined rotational speed should be achieved in order to start the control of the rotational phase and the rotational speed of the rotor elements.

Preferably, the main power source is capable of applying a first torque to the rotor elements and the starting power source is capable of applying a second torque to the rotor elements, wherein the first torque is smaller than the second torque.

According to the invention, the main power source can be designed with a decreased torque since the starting operation which requires a high torque is achieved by operating the starting power source.

Preferably, the main power source is controlled by said control device such that the operational speed of said rotor elements is an integer multiple of the rotational speed of the internal combustion engine, said integer multiple preferably has a value of 2.

It is known that the second order vibration originating from the operation of an internal combustion engine is the range of the total vibration frequency range which is to be diminished as much as possible. However, different orders can be taken into account such that the integer multiple can have different values than 2.

Preferably, a switchable clutch is arranged in a torque transmission path between said rotor elements and said starting power source, wherein the switchable clutch is engaged when said starting power source is operated and released when said starting power source is not operated.

Since the starting power source is only used upon starting, releasing the switchable clutch in the transmission path between the rotor elements and the starting power source decreases power losses which are otherwise generated due to dragging the starting power source.

Preferably, the apparatus further comprises a transmission to which the torque of the starting power source and/or the torque of the main power source are input and which outputs a combined torque which is transmitted from the transmission to the rotor elements.

According to this arrangement, the output torque of the main power source and the output torque of the starting power source can be introduced into the transmission and combined such that a combined torque can be output to the rotor elements. Further, the transmission serves as arrangement for adapting the rotational speed from the respective power sources to the requirements based on a specified gear ratio. In addition, the transmission serves as means for providing rotations for rotating the rotor elements in opposite directions.

Preferably, the arrangement is such that moving said rotor elements from the bottom dead center through the top dead center upon starting the rotor arrangement from the stopped condition requires a rated torque provided by said starting power source or said rated torque provided by said starting power source supplemented by a rated torque provided by said main power source.

Based on the above defined arrangement, the starting operation for moving the rotor elements from the bottom dead center through the top dead center can be achieved by operating the starting power source only or by operating the starting power source and the main power source in combination. In the latter case, the dimension and the rated power or rated torque of the starting power source can be further decreased since the output of the starting power source is supplemented by the output provided by the main power source.

Preferably, the arrangement is such that moving said rotor elements from the bottom dead center through the top dead center upon starting the rotor arrangement from the stopped condition requires a torque which is higher than the rated torque provided only by said main power source alone.

By taking into account the distinguished requirements of the starting operation and the continuous or steady operation of the rotor arrangement for minimizing the dimensions of the main power source, the system can be further simplified and the manufacturing costs thereof can be further decreased.

Preferably, the main power source is an electric motor and the starting power source is a pressurized air motor.

Further preferably, the electric motor is an alternating current induction motor and/or said pressurized air motor is a turbine-type air motor.

An electric motor has specific properties which enable a specific and simple phase and speed control. Further, an alternating current induction motor can be controlled by frequency inverters known in the art.

A pressurized air motor, in particular, a turbine-type air motor has low requirements of maintenance and can be controlled by a commonly used valve control mechanism. In addition, a pressurized air motor is adapted to provide a high output torque which is required for starting the rotor arrangement whereas a specific phase and speed control is not required.

The main power source and the starting power source can be embodied as different devices as long as the above defined effects can be achieved.

Preferably, the control device obtains signals from a sensor indicating the rotational speed and/or the rotational speed of the rotor elements and a sensor indicating the rotational speed and/or the rotational phase of a crank shaft of said internal combustion engine. Further, the control device employs the signals for controlling the main power source and said starting power source.

Based on the sensors which provide signals for indicating the rotational phase or position of the rotating members in question, a simple and accurate control of the rotational phases and the rotational speeds can be performed.

In addition, the operation of the vibration compensator apparatus can be adapted to the requirements, i.e. the predetermined relation to the rotational speed and the rotational phase of the internal combustion engine can be changed as needed with the use of such a control.

The invention further provides a system comprising a vibration compensator apparatus as previously defined and an internal combustion engine, wherein said internal combustion engine to which said apparatus is assigned, is a diesel engine, preferably a two-stroke diesel engine, wherein said apparatus and said internal combustion engine are vibration transmittingly mounted in a structure of said system. Preferably, the system is embodied as a ship having a hull forming said structure or, as alternative, a power generation plant having a foundation forming said structure.

### Brief description of the drawings

Fig. 1 is a cross-sectional view of the vibration compensator apparatus according to the embodiment.
Fig. 2 is a top view of the vibration compensator apparatus according to the embodiment.
Fig. 3 is a front-sectional view of the vibration compensator apparatus according to the embodiment.

Embodiments according to the present invention is explained in the following based on the attached drawings.

### Embodiments

In the following, embodiments of the vibration compensator apparatus according to the present invention are explained. The illustrated vibration compensator apparatus according to this embodiment can be employed in order to counteract vibrations originating from an internal combustion engine which is mounted in a hull of a ship.

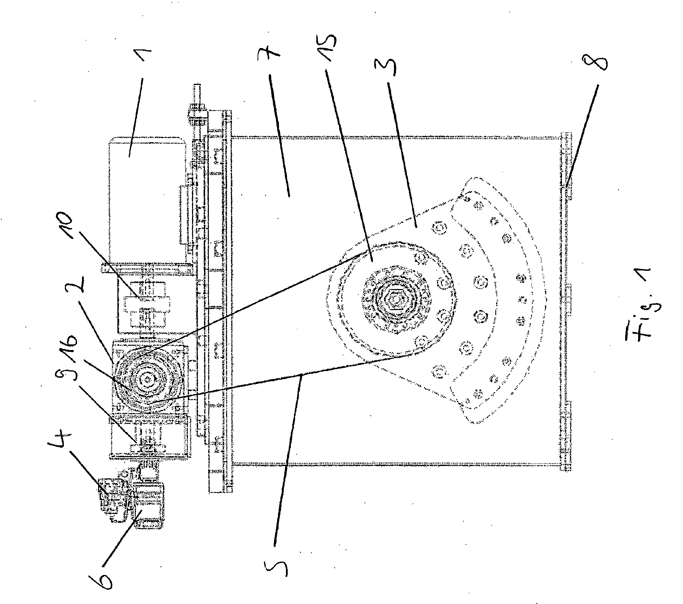

First, the general structure of the vibration compensator apparatus is explained based on the drawings. As illustrated in Fig. 1, the vibration compensator apparatus comprises a housing 7 which is provided with a support 8 at the bottom. The support 8 is formed such that the housing 7 can be mounted by the support 8 to a structure which requires vibration compensation. The housing 7 having the support 8 is mounted to the structure such that mass forces generated in operation of the apparatus can be transmitted between the apparatus and the structure, such as a hull of a ship having an internal combustion engine as drive source.

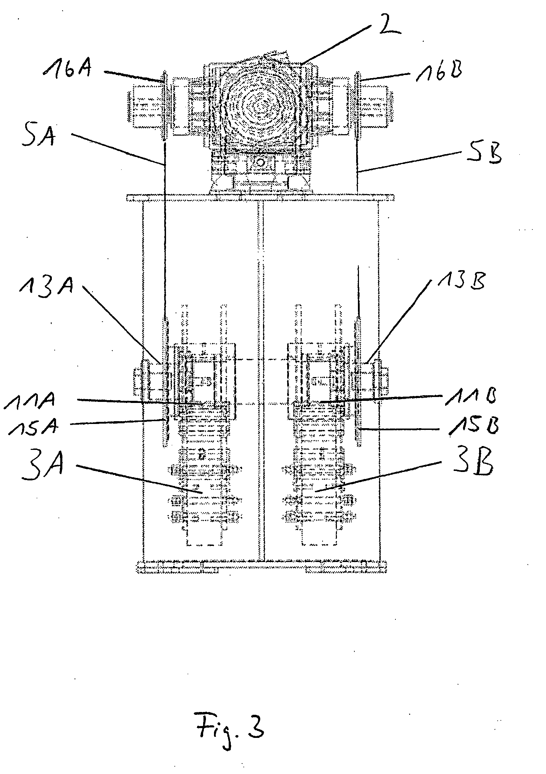

In the present embodiment, the rotor elements are arranged coaxially rotatable on respective journals 13A, 13B which are mounted in the housing and form the respective rotational axes of the rotor elements 3A, 3B. The rotor elements 3A, 3B are supported on the journals 13A, 13B via bearings 11A, 11B. As can be seen in Fig. 1 and Fig. 3, the rotor elements 3A, 3B are eccentric with respect to their rotational axes. Fig. 3 shows the rotors 3A, 3B forming a rotor arrangement 3 in the stopped condition where the rotor elements are positioned in the bottom dead center.

As illustrated in Fig. 1, each rotor element is provided with a driven wheel 15A, 15B which is formed by a driven sprocket in the present embodiment. The rotor elements 3A, 3B are rotatably supported on said journals 13A, 13B such that the rotor 3A, 3B elements can be rotated independently.

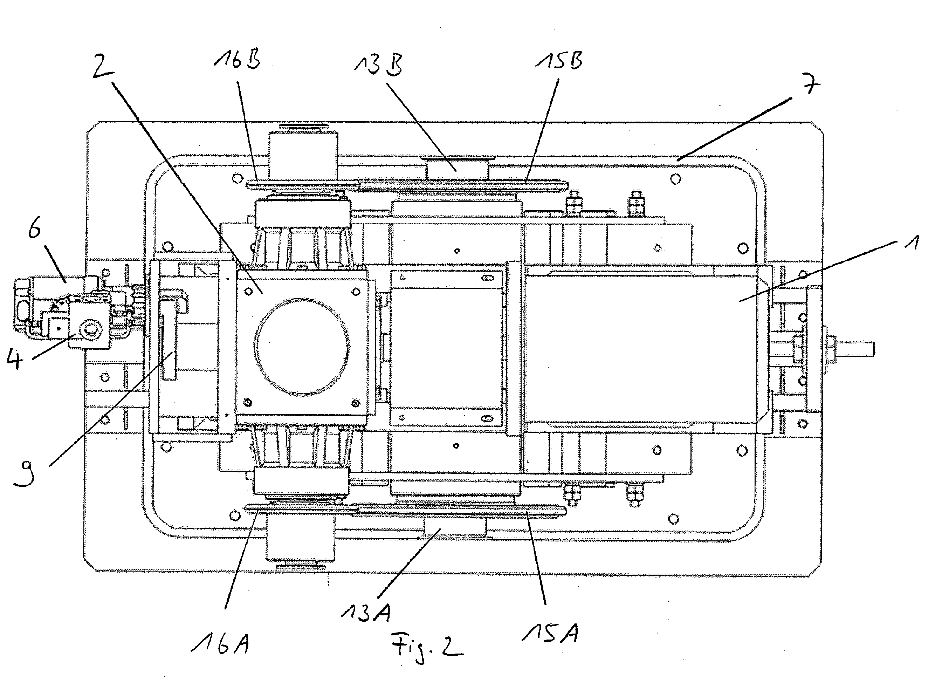

The vibration compensator apparatus according to the embodiment comprises an arrangement for driving the rotor elements 3A, 3B which is positioned on top of the housing 7 of the vibration compensator apparatus. As can be seen in Fig. 1, the arrangement includes an electric motor 1 as main power source and a pressurized air motor 6 as starting power source as explained below. Fig. 2 illustrates a transmission 2 which is positioned between the pressurized air motor 6 and the electric motor 1. The electric motor is drivingly connected to the transmission 2 via a torque transmitting coupling 10. The pressurized air motor 6 is connectable to the transmission 2 via a clutch which is formed as dog clutch 9 in this embodiment and which is switchable between an engaged and a disengaged position. In the engaged position of the dog clutch 9, the torque of the pressurized air motor 6 can be introduced into the gear transmission. In case that the dog clutch 9 is disengaged, the torque transmission between the pressurized air motor 6 and the transmission 2 inhibited.

As can be seen in Fig. 2, the transmission 2 includes two output shafts which are perpendicular to the axes of the pressurized air motor 6 and the electric motor 1 and coaxial to each other. The output shafts are provided with drive wheels which are embodied as drive sprockets 16A, 16B in the present embodiment. The drive sprockets 16A, 16B are aligned with the driven sprockets 15A, 15B of the rotor elements 3A, 3B.

As can be seen in Fig. 3, the drive sprocket 16A is connected to the driven sprocket 15A by a chain 5A and the drive sprocket 16B is connected to the driven sprocket 15B by a chain 5B.

The gear transmission is formed by a bevel gear structure such that the rotation input from the electric motor 1 is converted to a rotation of the drive sprockets 16A, 16B such that the rotational direction of the drive sprockets 16A, 16B is opposite to each other. The rotation of the drive sprockets 16A, 16B is transmitted to the driven sprockets 15A, 15B, such that the opposite directional rotation of the rotor elements is achieved. The dimension of the drive sprockets 16A, 16B and of the driven sprockets 15A, 15B is set such that a predetermined gear ratio is achieved between the sprockets. In the present embodiment, the diameters of the drive sprockets 16A, 16B is smaller than the diameter of the driven sprocket 15A, 15B in order to increase the torque from the transmission 2 to the rotor elements 3A, 3B.

The rotation of the pressurized air motor 6 is introduced into the transmission 2 in case that the dog clutch 9 is engaged and a control valve 4 provided for the pressurized air motor 6 is opened in order to supply pressurized air to the pressurized air motor 6.

The vibration compensator apparatus further comprises a control device which is not illustrated. The control device obtains signals from sensors in order to perform the control of the vibration compensator apparatus. The sensors include a sensor for detecting a rotational position of the crank shaft of the internal combustion engine which is arranged in the vibration structure. Further, the control device obtains signals from sensors which are provided for detecting rotational positions of the rotor element 3A and the rotor element 3B, respectively. Based on the signals provided by the sensors, the rotational phase of the respective elements, i.e. the crank shaft of the internal combustion engine, the rotor element 3A and the rotor element 3B can be detected and employed for the control.

In the following, the control of the vibration compensator apparatus according to the embodiment is explained.

In the stopped condition, the rotor elements 3A, 3B are positioned at the bottom dead center due to their eccentricity. Upon a starting requirement which is indicated i.e. by a determination that the internal combustion engine has been started, the control device initiates a starting procedure for starting the rotation of the rotor elements 3A, 3B. According to the embodiment, the control device controls the control valve 4 such that pressurized air is supplied to the pressurized air motor 6. In this connection, the dog clutch 9 is switched to the engaged position such that the torque output from the pressurized air motor 6 is introduced into the transmission 2. The transmission 2 supplies the torque to the drive sprockets 16A, 16B in opposite rotational directions. The rated torque and the rated power of the pressurized air motor 6 is designed such that the torque supplied to the drive sprockets 16A, 16B is sufficient to move the rotor elements 3A, 3B from the bottom dead center towards and through the top dead center of the rotor elements 3A, 3B.

The control device continuously detects the rotational phase of the rotor elements 3A, 3B. Once the rotor elements 3A, 3B are moved through the top dead center, the control device determines that the starting procedure can be ended. In case that the rotor elements 3A, 3B meet the above mentioned rotation related condition of having moved through the top dead center at least once, the control device switches off the control valve 4 and disengages the dog clutch 9 such that a torque is no longer transmitted from the pressurized air motor 6 to the transmission 2. Synchronized with this procedure, the operation of the electric motor 1 is initiated based on the control of the control device.

The electric motor 1 is controlled by the control device such that a specific rotational condition of the rotor elements 3A, 3B is achieved and maintained for a continuous operation of the vibration compensator apparatus. The rotational condition in this embodiment is set such that the rotational directions of the respective rotor elements 3A, 3B are opposite and such that the rotating rotor elements move through the top dead center and the bottom dead center in a synchronized manner. Based on such an operation, a mass induced force by the rotating rotor elements 3A, 3B is exerted via the journals 13A, 13B to the housing 7 and the support 8 which is directed vertically. The direction of the mass induced force of the apparatus is, however, not restricted to the vertical direction and is adapted to the needs in the particular structure which requires a measure for counteracting the vibration. The direction of the mass induced force can be set by adapting the rotational phase of the rotor elements which is known in the art.

The electric motor 1 is designed in order to provide a rated torque and rated power which is sufficient to continuously operate the vibration compensator apparatus, i.e. to drive the rotor elements 3A, 3B after the starting procedure has ended. Consequently, the electric motor can be designed with a rather low-rated torque and low-rated power compared to a prior art system which employs the electric motor 1 as only power source.

The vibration compensator apparatus as explained above can be employed in ships having a hull, wherein the power source for the ship is an internal combustion engine which is mounted in the hull which forms a vibration system. The vibration compensator apparatus is vibration transmittingly mounted in the hull in order to provide a counteraction of specific vibration actions originating from the operation of the internal combustion engine. Due to the fact that the second order vibration originating from the operation of internal combustion engines is the most critical vibration range in particular for hulls of ships, in the present embodiment, the vibration compensator apparatus is driven at a rotational speed which is twice the rotational speed of the internal combustion engine. However, due to the sophisticated control of the vibration compensator apparatus, other relations between the rotational speed and phase of the rotor elements 3A, 3B and the rotational speed and phase of the internal combustion engine can be selected and accurately controlled.

In the following, modified embodiments are explained.

While the main power source has been explained as electric motor 1, it is possible to employ a different power source, such as a hydraulic motor. In addition, the starting power source has been explained as pressurized air motor 6. However, the starting power source can be a different power source, such as hydraulic motor or an additional electric motor.

The power transmission from the drive sources to the rotor elements has been explained based on sprockets and chains. However, other arrangements are possible as long as the power transmission from the power source and the rotor elements is realized and meets the requirements of a phase and speed control.

Further, the embodiment has been explained based on a structure in which the journals forming the rotational axes of the rotor elements 3A, 3B are coaxially arranged. However, the rotor elements 3A, 3B can be arranged in a different way, such as with parallel axes as long as the mass forces can be achieved based on the opposite directional rotation of the rotor elements 3A, 3B.

Further, the dog clutch 9 can be replaced by a structure which enables a connection and disconnection of the starting power source and the gear transmission, such as a friction clutch or a one-way bearing.

The present invention has been exemplified based on a structure which includes a single pair of rotor elements. In order to counteract vibrations of a plurality of orders, more than one pair of rotor elements can be provided which are rotated at different rotational speeds taking into account different order vibrations. The application of the apparatus is not restricted to any specific type of vibration, such as vertical or horizontal directed vibrations. Further, the operation of the apparatus can be adapted to the requirements and, in particular, to the direction of forces and orders of vibrations.

In the above embodiment, the application of the vibration compensator apparatus has been discussed for a ship having a hull as vibrating structure. However, the vibration compensator apparatus can be employed for different applications, such as power generation plants, wherein the vibration system is formed by the foundation of the power plant for supporting the internal combustion engine and the vibration compensator apparatus for compensating vibrations originating from the internal combustion engine used for the power generation. Other applications of the vibration compensator apparatus are possible as long as the effects and advantages of the invention are achieved.

## Claims

1. Vibration compensator apparatus adapted to compensate vibrations generated by mass forces originating from an operation of an internal combustion engine to which said apparatus is assigned, comprising:
a rotor arrangement (3) comprising at least two rotor elements (3A, 3B) which are rotatable in opposite rotational directions about respective axes (13A, 13B) which are coaxial or parallel to each other, each rotor element (3A, 3B) having a mass related eccentricity in relation to the respective axis (13A, 13B), each rotor element (3A, 3B) is positioned at the bottom dead center due to their eccentricity in the stopped condition,
a main power source (1) which is drivingly connected to said rotor elements (3A, 3B), and
a control device which controls said main power source (1) in a continuous operation such that a rotational speed and a rotational phase of said rotor elements (3A, 3B) achieve a predetermined relation to a rotational speed and a rotational phase of said internal combustion engine, ***characterized in that***
said apparatus comprises, in addition to said main power source (1), a starting power source (6) which is drivingly connectable to said rotor elements (3A, 3B), wherein said control device controls a starting operation of said starting power source (6) such that said each rotor element (3A, 3B) is moved from the stopped condition towards and through the top dead center of the rotor elements as a predetermined rotation related condition.

2. Vibration compensator apparatus according to claim 1, wherein said starting power source (6) is operated upon starting the rotation of said rotor elements (3A, 3B) in order to move said rotor elements (3A, 3B) from the stopped condition and the operation thereof is stopped if said predetermined rotation related condition is met, wherein after said predetermined rotation related condition is met, said rotor elements (3A, 3B) are driven only by said main power source (1).

3. Vibration compensator apparatus according to claim 2, wherein the predetermined rotation related condition is met if the rotor elements (3A, 3B) are rotated at least once through a top dead center, and/or if the rotational speed of the rotor elements (3A, 3B) is higher than a predetermined starting rotational speed.

4. Vibration compensator apparatus according to one of the preceding claims, wherein the main power source (1) is capable of applying a first torque to the rotor elements (3A, 3B) and the starting power source (6) is capable of applying a second torque to the rotor elements (3A, 3B), wherein the first torque is smaller than the second torque.

5. Vibration compensator apparatus according to one of the preceding claims, wherein said main power source (1) is controlled by said control device such that the operational speed of said rotor elements (3A, 3B) is an integer multiple of the rotational speed of the internal combustion engine, said integer multiple preferably has a value of 2.

6. Vibration compensator apparatus according to one of the preceding claims, further comprising a switchable clutch (9) arranged in a torque transmission path between said rotor elements (3A, 3B) and said starting power source (6), wherein the switchable clutch (9) is engaged when said starting power source is operated and released when said starting power source (6) is not operated.

7. Vibration compensator apparatus according to one of the preceding claims, further comprising a transmission (2) to which the torque of the starting power source (6) and/or the torque of the main power source (1) are input and which outputs a combined torque which is transmitted from the transmission (2) to the rotor elements (3A, 3B).

8. Vibration compensator apparatus according to claim 7, wherein said transmission (2) outputs the torque to the respective rotor elements (3A, 3B) in opposite rotational directions.

9. Vibration compensator apparatus according to one of the preceding claims, wherein the arrangement is such that moving said rotor elements (3A, 3B) from the bottom dead center through the top dead center upon starting the rotor arrangement (3) from the stopped condition requires
a rated torque provided by said starting power source (6), or
said rated torque provided by said starting power source (6) supplemented by a rated torque provided by said main power source (1).

10. Vibration compensator apparatus according to one of the preceding claims, wherein the arrangement is such that moving said rotor elements (3A, 3B) from the bottom dead center through the top dead center upon starting the rotor arrangement (3) from the stopped condition requires a torque which is higher than the rated torque provided only by said main power source (1) alone.

11. Vibration compensator apparatus according to one of the preceding claims, wherein said main power source (1) is an electric motor, and said starting power source (6) is a pressurized air motor.

12. Vibration compensator apparatus according to claim 11, wherein said electric motor is an alternating current induction motor and/or said pressurized air motor is a turbine-type air motor.

13. Vibration compensator apparatus according to one of the preceding claims, wherein said control device obtains signals from
- a sensor indicating the rotational speed and/or the rotational speed of the rotor elements (3A, 3B) and
- a sensor indicating the rotational speed and/or the rotational phase of a crank shaft of said internal combustion engine,
wherein said control device employs the signals for controlling the main power source (1) and said starting power source (6).

14. System comprising a vibration compensator apparatus according to one of the preceding claims and an internal combustion engine, wherein said internal combustion engine to which said apparatus is assigned is a Diesel engine, preferably a two-stroke Diesel engine, wherein said apparatus and said internal combustion engine are vibration transmittingly mounted in a structure of said system.

15. System according to claims 14, the system being embodied as
- ship having a hull forming said structure, or
- power generation plant having a foundation forming said structure.

## Patentansprüche

1. Vibrationsausgleichsvorrichtung, die angepasst ist, Vibrationen auszugleichen, die von Massekräften erzeugt werden, die ihren Ursprung von einem Betrieb einer Brennkraftmaschine haben, zu der die Vorrichtung zugeteilt ist, mit:
einer Rotoranordnung (3) mit mindestens zwei Rotorelementen (3A, 3B), die in entgegengesetzten Rotationsrichtungen um jeweilige Achsen (13A, 13B) drehbar sind, die koaxial oder parallel zueinander sind, wobei jedes Rotorelement (3A, 3B) eine massebezogene Exzentrizität in Bezug auf die jeweilige Achse (13A, 13B) hat, wobei jedes Rotorelement (3A, 3B) an dem unteren Umkehrpunkt aufgrund ihrer Exzentrizität in dem gestoppten Zustand positioniert ist,
einer Hauptkraftquelle (1), die antriebsmäßig mit den Rotorelementen (3A, 3B) verbunden ist, und
einer Steuerungseinrichtung, die die Hauptkraftquelle (1) in einem fortlaufenden Betrieb steuert, sodass eine Rotationsgeschwindigkeit und eine Rotationsphase der Rotorelemente (3A, 3B) eine vorherbestimmte Beziehung zu einer Rotationsgeschwindigkeit und einer Rotationsphase der Brennkraftmaschine erreichen,
**dadurch gekennzeichnet, dass**
die Vorrichtung zusätzlich zu der Hauptkraftquelle (1) eine Startkraftquelle (6) aufweist, die antriebsmäßig mit den Rotorelementen (3A, 3B) verbindbar ist, wobei die Steuerungseinrichtung einen Startbetrieb der Startkraftquelle (6) steuert, sodass jedes Rotorelement (3A, 3B) vom dem gestoppten Zustand in Richtung und durch den oberen Umkehrpunkt der Rotorelemente als einen vorherbestimmten rotationsbezogenen Zustand bewegt wird.

2. Vibrationsausgleichsvorrichtung nach Anspruch 1, wobei die Startkraftquelle (6) auf ein Starten der Rotation der Rotorelemente (3A, 3B) betrieben wird, um die Rotorelemente (3A, 3B) von dem gestoppten Zustand zu bewegen, und ihr Betrieb gestoppt wird, falls der vorherbestimmte rotationsbezogene Zustand erfüllt ist, wobei, nachdem der vorherbestimmte rotationsbezogene Zustand erfüllt ist, die Rotorelemente (3A, 3B) nur von der Hauptkraftquelle (1) angetrieben werden.

3. Vibrationsausgleichsvorrichtung nach Anspruch 2, wobei der vorherbestimmte rotationsbezogene Zustand erfüllt ist, falls die Rotorelemente (3A, 3B) mindestens einmal durch einen oberen Umkehrpunkt rotiert werden, und/oder, falls die Rotationsgeschwindigkeit der Rotorelemente (3A, 3B) höher ist als eine vorherbestimmte Startrotationsgeschwindigkeit.

4. Vibrationsausgleichsvorrichtung nach einem der vorhergehenden Ansprüche, wobei die Hauptkraftquelle (1) in der Lage ist, ein erstes Drehmoment auf die Rotorelemente (3A, 3B) auszuüben und die Startkraftquelle (6) in der Lage ist, ein zweites Drehmoment auf die Rotorelemente (3A, 3B) auszuüben, wobei das erste Drehmoment kleiner ist als das zweite Drehmoment.

5. Vibrationsausgleichsvorrichtung nach einem der vorhergehenden Ansprüche, wobei die Hauptkraftquelle (1) von der Steuerungseinrichtung gesteuert ist, sodass die Betriebsgeschwindigkeit der Rotorelemente (3A, 3B) ein ganzzahliges Vielfaches der Rotationsgeschwindigkeit der Brennkraftmaschine ist, wobei das ganzzahlige Vielfache vorzugsweise den Wert 2 hat.

6. Vibrationsausgleichsvorrichtung nach einem der vorhergehenden Ansprüche, ferner mit einer schaltbaren Kupplung (9), die in einem Drehmomentübertragungspfad zwischen den Rotorelementen (3A, 3B) und der Startkraftquelle (6) angeordnet ist, wobei die schaltbare Kupplung (9) im Eingriff ist, wenn die Startkraftquelle betrieben wird, und gelöst ist, wenn die Startkraftquelle (6) nicht betrieben wird.

7. Vibrationsausgleichsvorrichtung nach einem der vorhergehenden Ansprüche, ferner mit einem Getriebe (2), zu dem das Drehmoment der Startkraftquelle (6) und/oder das Drehmoment der Hauptkraftquelle (1) eingegeben werden/wird, und, das ein kombiniertes Drehmoment ausgibt, das von dem Getriebe (2) zu den Rotorelementen (3A, 3B) übertragen wird.

8. Vibrationsausgleichsvorrichtung nach Anspruch 7, wobei das Getriebe (2) das Drehmoment zu dem jeweiligen Rotorelement (3A, 3B) in entgegengesetzte Rotationsrichtungen ausgibt.

9. Vibrationsausgleichsvorrichtung nach einem der vorhergehenden Ansprüche, wobei die Anordnung so ist, dass ein Bewegen der Rotorelemente (3A, 3B) von dem unteren Umkehrpunkt durch den oberen Umkehrpunkt auf ein Starten der Rotoranordnung (3) von dem gestoppten Zustand,
ein Nenndrehmoment, das von der Startkraftquelle (6) bereitgestellt wird, oder
das von der Startkraftquelle (6) bereitgestellte Nenndrehmoment ergänzt durch ein Nenndrehmoment, das von der Hauptkraftquelle (1) bereitgestellt wird,
erfordert.

10. Vibrationsausgleichsvorrichtung nach einem der vorhergehenden Ansprüche, wobei die Anordnung so ist, dass ein Bewegen der Rotorelemente (3A, 3B) von dem unteren Umkehrpunkt durch den oberen Umkehrpunkt auf ein Starten der Rotoranordnung (3) von dem gestoppten Zustand ein Drehmoment erfordert, das höher ist als das Nenndrehmoment, das nur von der Hauptkraftquelle (1) allein bereitgestellt wird.

11. Vibrationsausgleichsvorrichtung nach einem der vorhergehenden Ansprüche, wobei die Hauptkraftquelle (1) ein Elektromotor ist und die Startkraftquelle (6) ein Druckluftmotor ist.

12. Vibrationsausgleichsvorrichtung nach Anspruch 11, wobei der Elektromotor ein Wechselstrominduktionsmotor und/oder der Druckluftmotor ein Turbinentypluftmotor ist.

13. Vibrationsausgleichsvorrichtung nach einem der vorhergehenden Ansprüche, wobei die Steuerungseinrichtung Signale erhält von
- einem Sensor, der die Rotationsgeschwindigkeit und/oder die Rotationsphase der Rotorelemente (3A, 3B) anzeigt und
- einem Sensor, der die Rotationsgeschwindigkeit und/oder die Rotationsphase einer Kurbelwelle der Brennkraftmaschine anzeigt,
wobei die Steuerungseinrichtung die Signale zum Steuern der Hauptkraftquelle (1) und der Startkraftquelle (6) einsetzt.

14. System mit einer Vibrationsausgleichsvorrichtung nach einem der vorhergehenden Ansprüche und einer Brennkraftmaschine, wobei die Brennkraftmaschine, zu der die Vorrichtung zugeteilt ist, eine Dieselmaschine ist, vorzugsweise eine Zweitaktdieselmaschine, wobei die Vorrichtung und die Brennkraftmaschine vibrationsübertragend in einem Baukörper des Systems montiert sind.

15. System nach Anspruch 14, wobei das System verkörpert wird als
- Schiff mit einer Hülle, die den Baukörper ausbildet, oder
- Kraftwerk mit einem Fundament, das den Baukörper ausbildet.

## Revendications

1. Appareil compensateur de vibrations adapté pour compenser des vibrations générées par des forces massiques provenant d'une opération d'un moteur à combustion interne auquel est affecté ledit appareil, comprenant :
un agencement de rotors (3) comprenant au moins deux éléments de rotors (3A, 3B) qui peuvent tourner dans des directions de rotation opposées autour d'axes respectifs (13A, 13B) qui sont coaxiaux ou parallèles l'un à l'autre, chaque élément de rotor (3A, 3B) ayant une excentricité relative à la masse par rapport à l'axe respectif (13A, 13B), chaque élément de rotor (3A, 3B) est positionné au point mort bas en raison de son excentricité dans l'état arrêté,
une source d'alimentation principale (1) qui a reliée par entrainement auxdits éléments de rotors (3A, 3B), et
un dispositif de commande qui commande ladite source d'alimentation principale (1) dans une opération continue de sorte qu'une vitesse de rotation et une phase de rotation desdits éléments de rotors (3A, 4B) atteignent une relation prédéterminée à une vitesse de rotation et une phase de rotation dudit moteur à combustion interne, **caractérisé en ce que**
ledit appareil comprend, en plus de ladite source d'alimentation principale (1), une source d'alimentation de démarrage (6) qui peut être reliée par entraînement auxdits éléments de rotors (3A, 3B), où ledit dispositif de commande exécute une commande d'une opération de démarrage de ladite source d'alimentation de démarrage (6) de sorte que ledit chaque élément de rotor (3A, 3B) soit déplacé de l'état arrêté vers et à travers le point mort haut des éléments de rotors comme un état prédéterminé relatif à une rotation.

2. Appareil compensateur de vibrations selon la revendication 1, dans lequel ladite source d'alimentation de démarrage (6) est actionnée lors du début de la rotation desdits éléments de rotors (3A, 3B) afin de déplacer lesdits éléments de rotors (3A, 3B) de l'état arrêté et son opération est arrêtée si ledit état prédéterminé relatif à une rotation est atteint, dans lequel, après que ledit état prédéterminé relatif à une rotation est atteint, lesdits éléments de rotors (3A, 3B) sont entraînés uniquement par ladite source d'alimentation principale (1).

3. Appareil compensateur de vibrations selon la revendication 2, dans lequel l'état prédéterminé relatif à la rotation est atteint si les éléments de rotors (3A, 3B) sont mis en rotation au moins une fois à travers un point mort haut, et/ou si la vitesse de rotation des éléments de rotors (3A, 3B) est supérieure à une vitesse de rotation de démarrage prédéterminée.

4. Dispositif compensateur de vibrations selon l'une des revendications précédentes, dans lequel la source d'alimentation principale (1) est capable d'appliquer un premier couple aux éléments de rotors (3A, 3B) et la source d'alimentation de démarrage (6) est capable d'appliquer un deuxième couple aux éléments de rotors (3A, 3B), où le premier couple est plus petit que le deuxième couple.

5. Appareil compensateur de vibrations selon l'une des revendications précédentes, dans lequel ladite source d'alimentation principale (1) est commandée par ledit dispositif de commande de sorte que la vitesse opérationnelle desdits éléments de rotors (3A, 3B) soit un multiple entier de la vitesse de rotation du moteur à combustion interne, ledit multiple entier a de préférence une valeur égale à 2.

6. Appareil compensateur de vibrations selon l'une des revendications précédentes, comprenant en outre un embrayage commutable (9) agencé dans un trajet de transmission de couple entre lesdits éléments de rotors (3A, 3B) et ladite source d'alimentation de démarrage (6), où l'embrayage commutable (9) est engagé lorsque ladite source d'alimentation de démarrage est actionnée et libéré lorsque ladite source d'alimentation de démarrage (6) n'est pas actionnée.

7. Appareil compensateur de vibrations selon l'une des revendications précédentes, comprenant en outre une transmission (2) à laquelle le couple de la source d'alimentation de démarrage (6) et/ou le couple de la source d'alimentation principale (1) est introduit et qui délivre en sortie un couple combiné qui est transmis de la transmission (2) aux éléments de rotors (3A, 3B).

8. Appareil compensateur de vibrations selon la revendication 7, dans lequel ladite transmission (2) délivre en sortie le couple aux éléments de rotors respectifs (3A, 3B) dans des directions de rotation opposées.

9. Appareil compensateur de vibrations selon l'une des revendications précédentes, dans lequel l'agencement est tel que le déplacement desdits éléments de rotors (3A, 3B) à partir du point mort bas à travers le point mort haut lors du démarrage de l'agencement de rotors (3) à partir de l'état arrêté nécessite
un couple nominal fourni par ladite source d'alimentation de démarrage (6) ou
ledit couple nominal fourni par ladite source d'alimentation de démarrage (6) complété par un couple nominal fourni par ladite source d'alimentation principale (1).

10. Appareil compensateur de vibrations selon l'une des revendications précédentes, dans lequel l'agencement est tel que le déplacement desdits éléments de rotors (3A, 3B) à partir du point mort bas à travers le point mort haut lors du démarrage de l'agencement de rotors (3) à partir de l'état arrêté nécessite un couple qui est supérieur au couple nominal fourni uniquement par ladite source d'alimentation principale (1) seule.

11. Appareil compensateur de vibrations selon l'une des revendications précédentes, dans lequel ladite source d'alimentation principale (1) est un moteur électrique, et ladite source d'alimentation de démarrage (6) est un moteur pneumatique sous pression.

12. Appareil compensateur de vibrations selon la revendication 11, dans lequel ledit moteur électrique est un moteur à induction à courant alternatif et/ou ledit moteur pneumatique sous pression est un moteur pneumatique de type turbine.

13. Appareil compensateur de vibrations selon l'une des revendications précédentes, dans lequel ledit dispositif de commande obtient des signaux provenant
d'un capteur indiquant la vitesse de rotation et/ou la vitesse de rotation des éléments de rotors (3A, 3B) et
d'un capteur indiquant la vitesse de rotation et/ou la phase de rotation vilebrequin dudit moteur à combustion interne,
dans lequel ledit dispositif de commande utilise les signaux pour commander la source d'alimentation principale (1) et ladite source d'alimentation de démarrage (6).

14. Système comprenant un appareil compensateur de vibrations selon l'une des revendications précédentes et un moteur à combustion interne, dans lequel ledit moteur à combustion interne auquel est affecté ledit appareil est un moteur Diesel, de préférence un moteur Diesel à deux temps, dans lequel ledit appareil et ledit moteur à combustion interne sont une vibration montée par transmission dans une structure dudit système.

15. Système selon la revendication 14, le système étant intégré en tant que
bateau ayant une coque formant ladite structure, ou
usine de production d'énergie ayant une fondation formant ladite structure.
